# EUROPÄISCHE PATENTANMELDUNG

(11) **EP 2 514 787 A2**
(43) Veröffentlichungstag der Anmeldung: **24.10.2012**
(21) Anmeldenummer: 12164517.0
(22) Anmeldetag: 17.04.2012
(51) Int. Cl.: C08J 9/14, C09J 175/04

(54) **Schaumkleber in einer Aerosoldose**

(30) Priorität: 17.04.2011 DE 102011002119; 07.07.2011 DE 102011051658
(71) Anmelder: Den Braven Aerosols GmbH & Co.KG, 97234 Reichenberg-Albertshausen (DE)
(72) Erfinder: Muntean, Viorica, 2000 Stockerau (AT); Lindner, Peter, 97232 Giebelstadt (DE)
(74) Vertreter: Weissfloh, Ingo

(57) **Zusammenfassung**

Aufgabe der Erfindung ist es, einen Schaumkleber unter Nutzung einer Aerosoldose zur Aufbewahrung und Verarbeitung nach Art eines Dosenschaums zu schaffen, der eine gleichmäßige Klebeschicht nach dem Auftragen mindestens eines linienförmigen Schaumkleberkörpers und dem anschließenden schnellen Kollabieren des Schaumklebers auf dem zu verklebenden Teil ermöglicht. Neben dem Auftragen des Schaumklebers mittels einer Schaumpistole soll der Schaum auch durch handelsübliche Kunststoffadapter auftragbar sein. Das Kollabieren des aufgetragenen Schaumklebers soll nach wenigen Sekunden beginnen. Gegenüber anderen ähnlichen Produkten soll die Anzahl der beigemischten Stoffe des Schaumklebers reduziert werden. Weiterhin wird ein schnelles Arbeiten und Verarbeiten ermöglicht, indem lange Wartezeiten entfallen.

Der Schaumkleber setzt sich aus folgenden Bestandteilen zusammen: 10 Gew.% bis 35 Gew.% Polyol, 0,1 Gew.% bis 25 Gew.% Weichmacher, 0,1 Gew.% bis 10 Gew.% Katalysator, 25 Gew.% bis 60 Gew.% Isocyanat und 5 Gew.% bis 30 Gew.% Treibmittel.

Beim Verfahren werden die zu verklebenden Oberflächen der Bausteine oder anderer Baumaterialien mit einem Beschleunigungsmittel besprüht oder in dieses getaucht, anschließend werden die zu verklebenden Oberflächen mit dem erfindungsgemäßen Schaumkleber mit mindestens einem linienförmigen Schaumkörper versehen, nach dem Zerfallen des Schaums in einer Zeitspanne von 4 bis zu 10 Sekunden bildet sich eine Klebeschicht von 1 mm bis zu 5 mm. Danach werden die zu verklebenden Oberflächen aneinander gebracht.

## Beschreibung

Schaumkleber unter Nutzung einer Aerosoldose zur Aufbewahrung und Verarbeitung

Schaumkleber unter Nutzung einer Aerosoldose zur Aufbewahrung und Verarbeitung nach Art eines Dosenschaums vorzugsweise zum Verkleben von Baumaterialien, wie z. B. zur Herstellung von Mauerwerk.

Das Verkleben von ziegeln mittels Dosenschaum zu Mauerwerk ist Stand der Technik. So bewirbt die Firma Wienerberger aus Österreich in ihrem Prospekt "POROTHERM DRYFIX.System" vom September 2008 einen Dosenschaum zur Herstellung von Planziegelmauerwerk.

In der EP 1 623 078 B1 wird ein Verfahren zum Verbinden von Bausteinen mit Hohlkammern zur Bildung eines Bausteinverbundes mittels eines Verbindungsmaterials auf der Basis eines expandierenden Kunststoffmaterials wie z. B. Polyurethan und ein dazugehöriger Bausteinverbund beschrieben. Der Klebespalt zwischen zwei verbundenen Bausteinen soll im Wesentlichen eine konstante Breite von maximal 1 mm aufweisen. Dies bedingt eine Bearbeitung der Ziegel, vorzugsweise eine Schleifbearbeitung.

In der EP 2 064 298 B1 wird ein Verfahren zur Durchführung einer Verklebung mittels PU-Dosenschaum beschrieben. Zur Ausbildung einer Klebeschicht wird ein PU-Dosenschaum verwendet, der ein Anti-Schaummittel enthält. Der Dosenschaum wird als Schaumraupe auf einen Klebeuntergrund aufgetragen, der dann in sich zusammenfällt. Die Klebeschicht beträgt dann maximal 2 mm. Die Einstellung des PU-Schaums ist hierbei so gewählt, dass sich eine Abbindezeit von 0,5 bis 30 Minuten nach Auftragen der Schaumraupe ergibt.

Aufgabe der Erfindung ist es, einen Schaumkleber unter Nutzung einer Aerosoldose zur Aufbewahrung und Verarbeitung nach Art eines Dosenschaums zu schaffen, der eine gleichmäßige Klebeschicht nach dem Auftragen mindestens eines linienförmigen Schaumkleberkörpers und dem anschließenden schnellen Kollabieren des Schaumklebers auf dem zu verklebenden Teil ermöglicht. Neben dem Auftragen des Schaumklebers mittels einer Schaumpistole soll der Schaum auch durch handelsübliche Kunststoffadapter auftragbar sein. Das Kollabieren des aufgetragenen Schaumklebers soll nach wenigen Sekunden beginnen. Gegenüber anderen ähnlichen Produkten soll die Anzahl der beigemischten Stoffe des Schaumklebers reduziert werden. Weiterhin wird ein schnelles Arbeiten und Verarbeiten ermöglicht, indem lange Wartezeiten entfallen.

Die Aufgabe wird durch die Merkmale des Hauptanspruchs bzw. durch die Merkmale des Nebenanspruchs gelöst. Die Zusammensetzung des Schaumklebers garantiert eine geschlossene Schaumkleberschicht ohne Fehlstellen. Durch die Zusammensetzung wird die anfängliche Expansion des Schaumklebers beim Auftragen auf eine Mindestmaß reduziert und garantiert ein zeitnahes Kollabieren ohne Zusatz von Anti-Schaummittel. Somit kann eine zügige Verklebung der Bausteine oder anderer Baumaterialien untereinander erfolgen. Gegenüber anderen Herstellern wird bei der erfindungsgemäßen Lösung eine Reduzierung der eingesetzten Stoffe erreicht. So wird z. B. kein Stabilisierungsmittel bzw. keine Mischung von Stabilisierungs- und Destabilisierungsmitteln eingesetzt. Weiterhin entfallen sonst übliche Zellöffner. Als Beschleunigungsmittel kann reines Wasser ohne weitere Zusätze wie Katalysator und Kettenverlängerer verwendet werden, was eine Kostenreduzierung ermöglicht. Ein weiterer wesentlicher Vorteil ist der mögliche Einsatz von Adaptern beim Auftragen des Schaumklebers auf der zu verklebenden Fläche. Es müssen hierzu keine schaumpistolen eingesetzt werden. Beim Auftragen des Schaumklebers beträgt die Schichtdicke nach dem Kollabieren noch bis zu 3 mm. Somit lassen sich problemlos Bausteine, die herstellungsbedingt Unebenheiten an allen Außenwänden besitzen, sicher verkleben. Vorteilhafte Ausgestaltungen der Zusammensetzung des Schaumklebers sind in Anspruch 2 dargestellt. Vorteilhafte Ausgestaltungen der Erfindung zum Verfahren sind in den Ansprüchen 5 bis 8 dargestellt.

Bei der Weiterbildung nach Anspruch 2 kann der Zusammensetzung des Schaumklebers noch ein Anteil Reaktivverdünner zugesetzt werden. Bei einer entsprechenden Mischung der einzelnen Bestandteile wird das Kollabieren begünstigt, indem die verbleibenden Zellen in der Klebeschicht zerstört werden. Weiterhin ist dieser Schaumkleber besonders geeignet mittels einer Schaumpistole aus der Aerosoldose auf die gewünschte Klebefläche aufgetragen zu werden. Der Schaumkleber ist frei von Kettenverlängerern, Zellöffnern, Stabilisierungsmitteln und Antischaummitteln. Durch diesen Wegfall einzelner Stoffe vereinfacht sich die Herstellung und es werden Rohstoffkosten eingespart.

Nach Anspruch 3 ist als Treibmittel zusätzlich Isobutan vorgesehen. Die Kombination dieses Treibmittels mit dem Treibmittel Dimethylether ermöglicht eine geeignete Zusammensetzung um einen schwach expandierenden und zugleich schnell kollabierenden Schaumkleber zu erhalten.

Nach Anspruch 6 wird als Beschleunigungsmittel reines Wasser verwendet ohne Zuschläge von Katalysator und Kettenverlängerer. Hierdurch ist das verwendete Beschleunigungsmittel kostengünstiger. Bei der Weiterbildung des Verfahrens nach Anspruch 7 beträgt die Abbindezeit 8 bis 12 Minuten, vorteilhaft bis 10 Minuten. Dies ist eine ausreichende Zeit, um eine Steinanordnung sicher und guter Qualität ausführen zu können. Nach Anspruch 8 ist der Schaumkleber so eingestellt, dass die Klebeverbindung nach 10 bis 24 Stunden belastet werden kann. Diese Zeitspanne richtet sich nach den praktischen Erfahrungen beim Einsatz des Schaumklebers. Nach Anspruch 9 kann neben der Schaumpistole auch ein handelsüblicher Adapter eingesetzt werden. Hierdurch entfällt die notwendige Reinigungsarbeit der Schaumpistole, da der Adapter nach der Anwendung nicht wieder verwendet wird und somit eine Reinigung nicht notwendig ist. Bei einer speziellen Zusammensetzung des Schaumklebers kann ein Adapter mit einem Durchmesser von 2,5 bis 3 mm eingesetzt werden.

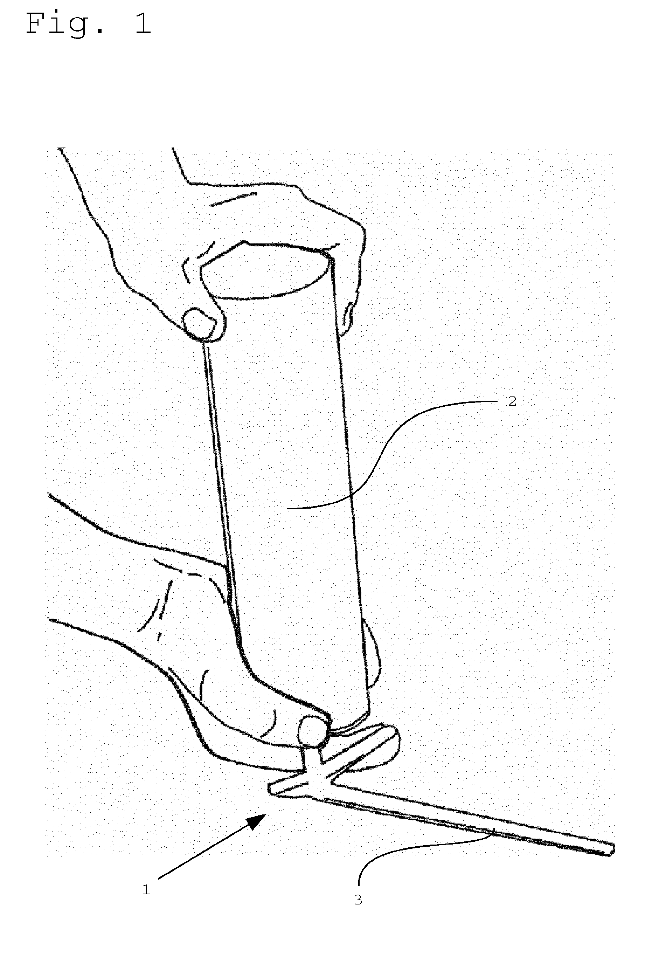

Mehrere Ausführungsbeispiele der Erfindung werden im Folgenden näher beschrieben. Die dazugehörigen Zeichnungen zeigen in
- Fig. 1: einen Adapter aufgesteckt auf der Aerosoldose und

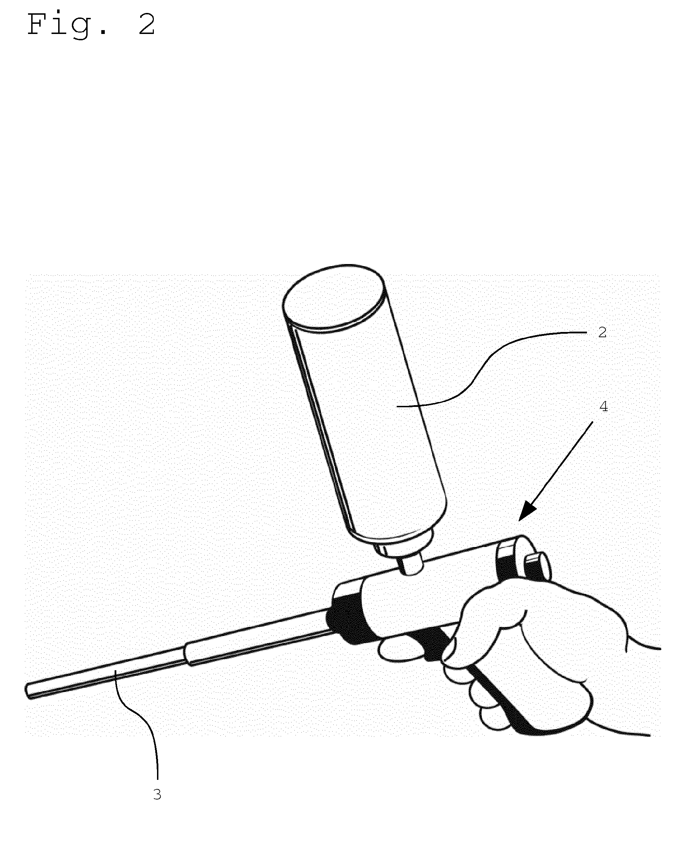

- Fig. 2: eine Aerosoldose aufgesteckt auf einer

Schaumpistole.

Der Schaumkleber besteht aus folgenden Komponenten:
- 10 Gew.% bis 35 Gew.% Polyol, z.B. Polyether oder Polyesterpolyol oder Mischungen von Polyolen mit einer Molekularmasse von 200 bis 3000 g/mol, allein oder gemischt. um die viskosität und Flexibilität des Produktes positiv zu beeinflussen,
- 0,1 Gew.% bis 25 Gew. % Weichmacher Chlorparafin mit verschiedenem Chlorgehalt, Phosphorsäurester, wie TCPP- Tri(chlorisopropylphosphat), TEP-Triethylphosphat, TCEP-Tri(chlorethylphosphat) oder andere inaktive Polyole mit sterisch gehinderte OH-Gruppen, allein oder verschiedene Weichmacher gemischt,
- 0,1 Gew.% bis 10 Gew.% Katalysator, vorzugsweise PU-Katalysatoren, Amine wie 2,2' Dimorpholino-Diethylether-Jeffcat DMDEE oder DMDLS, Mischung aus 2-Dimethylaminoethylether mit Dipropylenglycol wie Niax A1, zinnverbindungen wie DBTL-Dibutylzinn dilaurat oder andere PU-Katalysatoren. Die Katalysatoren können auch in Mischungen mit anderen Katalysatoren eingesetzt werden.
- 25 Gew.% bis 60 Gew.% Isocyanat, bevorzugter Einsatz von Diphenylmethandiisocyanat,
- 5 Gew.% bis 30 Gew.% Treibmittel, bevorzugter Einsatz von Dimethylether oder Mischungen mit anderen Treibmitteln wie Isobutan.

Zum Erreichen eines schnellen und nahezu vollständigen Kollabierens des Schaumklebers wurden verschiedene Zusammensetzungen der Bestandteile in den in der Übersicht dargestellten Kombinationen und Mengen vorgenommen.

| Komponenten | Versuchsreihe | | |
|---|---|---|---|
| | A | B | C |
| | | | |
| Polyolmix | | | |
| Voranol 1055 | 14,26 | 14,27 | 14,29 |
| Voranol 1010 | 10,81 | 10,84 | 10,87 |
| Chlorparafin 45 | 10,83 | 10,85 | 10,89 |
| Jeffcatt DMDLS | 0,35 | 0,35 | 0,35 |
| | | | |
| PMDI | 46,10 | 46,33 | 46,25 |
| | | | |
| Propan | 3,17 | 2,25 | |
| Isobutan | 6,28 | 4,43 | 6,67 |
| Dimethyether | 8,20 | 10,68 | 10,68 |

Bei der Anwendung zeigten sich beim Versuch A negative Effekte, welche eine zu starke Expansion und ein zu schwaches Kollabieren des Schaumklebers bewirkten. Durch Anpassung der Treibmittelzusammensetzung konnten die Ergebnisse beim Versuch B verbessert werden. Ein optimales Ergebnis wurde durch die in Versuch C gewählte Zusammensetzung der Treibmittel erreicht. Hierbei expandierte der Schaumklebers nur gering und kollabierte schon innerhalb von 10 Sekunden. Wenn Treibmittel mit hohem Druck, wie Propan verwendet werden, wie in A und B, ist der Kollaps langsamer und schwächer. Es bleibt eine Schaumschicht und keine Kleberschicht. Zur Verbesserung der Ergebnisse hinsichtlich des Kollabierens wurde zusätzlich ein Reaktivverdünner Propylencarbonat "Jeffsol PC" eingesetzt. Dieser Reaktivverdünner soll die verbleidenden Zellen in der Klebeschicht zerstören, sodass eine zellfreie Kleberschicht entsteht. Die jeweilige Zusammensetzung wird in der folgenden Tabelle dargestellt.

| Komponenten | Versuchsreihe | | | |
|---|---|---|---|---|
| | E | F | G | H |
| | | | | |
| Polyolmix | | | | |
| Voranol 1055 | 14,36 | 13,49 | 14,43 | 14,02 |
| Voranol 1010 | 10,91 | 10,27 | 10,99 | 10,65 |
| Chlorparaffin 45 | 10,96 | 10,28 | 11,01 | 10,70 |
| Jeffcat DMDLS | 0,35 | 0,34 | 0,35 | 0,35 |
| Jeffsol PC | | 4,63 | 3,82 | 1,97 |
| | | | | |
| PMDI | 46,45 | 43,68 | 46,73 | 45,36 |
| | | | | |
| Isobutane | | 6,66 | | |
| Dimethyether | 16,97 | 10,65 | 12,67 | 16,95 |

Die Versuchsreihen F bis H zeigten, dass allein die Wirkung von Jeffsol PC als Reaktivverdünner nicht die gewünschten Ergebnisse brachte. Verschiedene Zusammensetzungen hinsichtlich der Anteile der Treibmittel und des Reaktivverdünners führten zum Ergebnis, dass die Zusammensetzung von Versuch E die geringste Schaumbildung und ein optimales Kollabieren zeigte. Hierbei wurde das Mischungsverhältnis der Treibmittel hin zur alleinigen Verwendung des Dimethylethers verändert. Zugleich wurde der Reaktivverdünner weggelassen. Der positive Effekt dieser Zusammensetzung ergibt sich aus der hohen Lösekraft des Treibmittels Dimethylether. Bei einem Anteil von 16 bis 17 Gew.% an der Zusammensetzung übernimmt das Dimethylether die Funktion des alleinigen Treibmittels und die Funktion des Lösemittels zur Zerstörung der verbleidenden Zellen.

Als Beschleunigungsmittel bei der Anwendung des Schaumklebers wird reines Wasser durch Aufsprühen auf die zu verklebende Oberfläche verwendet. Vorteilhaft ist auch das Eintauchen des zu verklebenden Steines in das Wasser vor dem Auftragen des Schaumklebers.

Für die Verarbeitung des Schaumklebers mittels Schaumpistole 4 aus der Aerosoldose, wie z.B. für die 1 K-Pistolenschäume verwendeten Pistolen 4, ist folgende Zusammensetzung vorgesehen:
22 Gew.% bis 25 Gew.% Polyol, 10 Gew.% bis 11 Gew.% Weichmacher, 0,1 Gew.% bis 1,2 Gew.% Katalysator, 0,0 Gew.% bis 6 Gew.% Reaktivverdünner, 43 Gew.% bis 47 Gew.% Isocyanat und 10 Gew.% bis 25 Gew.% Treibmittel. Als konkretes Ausführungsbeispiel sei hier folgende Zusammensetzung des Schaumklebers wie in Versuch G genannt:
   Voranol 1055 mit 14,4 Gew.% und Voranol 1010 mit 11 Gew.%,
   Chlorparafin mit 11 Gew.%, Jeffcat DMDLS mit 0,4 Gew.%,
   Propylencarbonat mit 3,8 Gew.%,
4,4' Dipfenylmethandiisocyanat mit 46,7 Gew.% und Treibmittel mit 12,7 Gew.%.

Eine folgende, bevorzugte Zusammensetzung des Schaumklebers zum Austragen mittels eines Adapters 1 aus der Aerosoldose ist die folgende wie in Versuch E aufgeführt: 25,3 Gew. % Polyol, 11 Gew.% Weichmacher, 0,4 Gew.% Katalysator, 46,4 Gew.% Isocyanat und 16,9 Gew.% Treibmittel. Die Kanüle 3 des Adapters 1 besitzt hierzu vorteilhaft einen Durchmesser von 2,5 bis 3 mm.

Der Adapter 1, wie in der beigefügten Zeichnung dargestellt, ist ein bereits auf dem Markt handelsübliches Zusatzteil für Aerosoldosen 2.

Das Verfahren zur Verwendung von Schaumkleber zwecks Verklebung von Bausteinen z. B. zur Herstellung von Mauerwerk ist durch folgende Schritte charakterisiert. Die zu verklebenden Oberflächen der Bausteine werden mit einem Beschleunigungsmittel besprüht oder noch einfacher in dieses getaucht. Als Beschleunigungsmittel wird reines Wasser ohne spezielle Zusätze verwendet. Anschließend wird auf die zu verklebenden Oberflächen mit einem Schaumkleber bestehend aus Polyol, Weichmacher, Katalysator, Isocyanat und Treibmittel, entsprechend der Zusammensetzung wie bereits oben beschrieben, vorteilhaft mindestens ein linienförmiger Schaumkörper, durchgehend oder unterbrochen, auf den Stein aufgebracht. Nach dem Zerfallen des Schaums in einer Zeitspanne von 4 bis zu 10 Sekunden bildet sich eine Klebeschicht von 1 mm bis zu 5 mm. Nach dem Kollabieren des Schaumklebers werden nun die zu verklebenden Oberflächen aneinander gebracht, das heißt es wird Stein auf Stein gesetzt. Hier bei ist zu beachten, dass die Klebeschicht nach 8 Minuten bis 12 Minuten abgebunden ist. Vor dieser Zeit ist der Klebevorgang zu beenden. Die Klebverbindung ist nach 10 Stunden bis 24 Stunden belastbar.

Das Auftragen des Schaumklebers auf die zu verklebende Fläche unterscheidet sich bei der Verwendung einer Aerosoldose 2 mit einer Schaumpistole 4 von der mit einem Adapter 1 nur unwesentlich. Bei einer Schaumpistole 4 wird der Bediengriff in Richtung Haltegriff gedrückt. Beim Adapter 1 wird dieser in Richtung Aerosoldose 2 in gekippter Stellung gedrückt. Der wesentliche Vorteil des Adapters 1 zur Schaumpistole 4 ergibt sich aus dem Wegfall der sonst notwendigen Reinigung.

Es ist logisch, dass mit dem Schaumkleber auch andere Baumaterialien neben den bereits erwähnten Bausteinen miteinander mittels des erfindungsgemäßen Schaumklebers verbunden werden können.

Zusammenstellung der Bezugszeichen
- 1 -: Adapter
- 2 -: Aerosoldose
- 3 -: Kanüle
- 4 -: Schaumpistole, Pistole

## Patentansprüche

1. Schaumkleber unter Nutzung einer Aerosoldose zur Aufbewahrung und Verarbeitung,
**dadurch gekennzeichnet,**
**dass** der Schaumkleber sich aus folgenden Bestandteilen zusammensetzt:
- 10 Gew.% bis 35 Gew.% Polyol,
- 0,1 Gew.% bis 25 Gew.% Weichmacher,
- 0,1 Gew.% bis 10 Gew.% Katalysator,
- 25 Gew.% bis 60 Gew.% Isocyanat und
- 5 Gew.% bis 30 Gew.% Treibmittel Dimethylether.

2. Schaumkleber nach Anspruch 1,
**dadurch gekennzeichnet,**
**dass** der Zusammensetzung noch ein Reaktivverdünner von 0,1 Gew.% bis 6 Gew.% beigeben ist.

3. Schaumkleber nach Anspruch 1,
**dadurch gekennzeichnet,**
**dass** der Zusammensetzung als weiteres Treibmittel Isobutan von 0,1 Gew.% bis 10 Gew.% beigeben ist.

4. Verwendung von Schaumkleber nach Anspruch 1 und 2 zur Verklebung insbesondere von Bausteinen und anderen Baumaterialien zur Herstellung von Mauerwerk oder anderen Baukörpern.

5. Verfahren zur Verwendung von Schaumkleber zwecks Verklebung von Bausteinen und anderen Baumaterialien, **gekennzeichnet durch** folgende Merkmale,
- dass die zu verklebenden Oberflächen der Bausteine/Baumaterialen mit einem Beschleunigungsmittel besprüht oder in dieses getaucht werden,
- dass anschließend auf die zu verklebenden Oberflächen mit einem Schaumkleber bestehend aus Polyol, Weichmacher, Katalysator, Isocyanat und Treibmittel nach Anspruch 1 mindestens ein linienförmiger Schaumkörper, durchgehend oder unterbrochen, aufgebracht wird,
- dass sich nach dem Zerfallen des Schaums in einer Zeitspanne von 4 bis zu 10 Sekunden eine Klebeschicht von 1 mm bis zu 5 mm bildet und nun die zu verklebenden Oberflächen der zu verklebenden baumaterialein aneinander gebracht werden.

6. Verfahren nach Anspruch 4,
**dadurch gekennzeichnet,**
**dass** das Beschleunigungsmittel aus 100% Wasser besteht.

7. Verfahren nach den Ansprüche 4 und 5,
**dadurch gekennzeichnet,**
**dass** die Klebeschicht nach 8 Minuten bis 12 Minuten abgebunden ist.

8. Verfahren nach den Ansprüche 4 bis 6,
**dadurch gekennzeichnet,**
**dass** die Klebverbindung nach 10 Stunden bis 24 Stunden belastbar ist.

9. Verfahren nach den Ansprüche 4 bis 7,
**dadurch gekennzeichnet,**
**dass** der Schaumkleber mit einer Pistole (4) oder mit einem Adapter (1) mit einer aufgesteckten Kanüle (3) von 2 bis 7 mm Durchmesser aufgebracht wird.
